# EUROPEAN PATENT APPLICATION

(11) **EP 4 723 414 A1**
(43) Date of publication of application: **08.04.2026**
(21) Application number: 23940386.8
(22) Date of filing: 11.10.2023
(51) Int. Cl.: H02J 1/10, H02J 3/02, H02J 3/38, H02J 13/00

(54) **CONTROL ARCHITECTURE FOR FLEXIBLE DIRECT-CURRENT TRACTION POWER SUPPLY SYSTEM BASED ON ENERGY ROUTERS**

(30) Priority: 06.06.2023 CN 202310660727
(71) Applicant: TSINGHUA UNIVERSITY, Beijing, 100084 (CN)
(72) Inventor: LI, Xiaoqian, Beijing 100084 (CN); LU, Chao, Beijing 100084 (CN); LI, Zhanhe, Beijing 100084 (CN); WEI, Yingdong, Beijing 100084 (CN); BAO, Weihan, Beijing 100084 (CN)
(74) Representative: Dehns Germany Partnerschaft mbB
(86) International application number: PCT/CN2023/123956
(87) International publication number: WO 2024/250509

(57) **Abstract**

The present invention belongs to the field of direct-current traction power supply systems. Disclosed is a control architecture for a flexible direct-current traction power supply system based on energy routers. The flexible direct-current traction power supply system comprises a plurality of traction substations, and external power sources connected to the plurality of traction substations, wherein locomotives are connected to the traction substations by means of a catenary system, each traction substation comprises a plurality of energy routers, and each energy router comprises at least three ports, a first port being connected to the external power source by means of a traction substation alternating-current bus, a second port being connected to the catenary system by means of a traction bus, and the other ports being connected to one or more of photovoltaics, wind power, energy storage, a direct-current load and an alternating-current load. The solution of the present invention overcomes the defects of existing direct-current traction power supply systems using a diode rectifier unit as a core power supply device and existing direct-current traction power supply systems based on energy routers in the aspect of system structure design, and provides a corresponding collaborative control technical solution.

## Description

### CROSS-REFERENCES TO RELATED APPLICATIONS

This application claims the priority to Chinese Patent Application No. 202310660727.1, filed by Tsinghua University on June 6, 2023 and entitled "CONTROL ARCHITECTURE FOR FLEXIBLE DIRECT-CURRENT TRACTION POWER SUPPLY SYSTEM BASED ON ENERGY ROUTERS", the entire contents of which are incorporated herein by reference.

### FIELD

The present disclosure relates to the technical field of direct-current traction power supply systems, and in particular, to a control architecture for a flexible direct-current traction power supply system based on energy routers.

### BACKGROUND

A traditional direct-current traction power supply system is a power supply system with diode rectifier units as its core power supply devices. However, with the rapid development of urban rail transit, the development of traction power supply systems is facing new challenges. As the transportation capacity and mileage of urban rail transit such as subways and light rails increase rapidly, the power supply capacity and the power supply distance of the direct-current traction power supply system also increase accordingly. The direct-current traction power supply system has higher requirements for the power supply capacity of an external power source and seriously affects economic construction of the external power grid. Meanwhile, energy consumption of direct-current traction power supply is increasing. In response to the concept of "green development", it is urgently necessary to improve the energy utilization rate. To overcome shortcomings of the traditional direct-current traction power supply system, it is necessary to regulate power flow distribution within the direct-current traction power supply system and optimize the voltage and energy distribution. However, the diode rectifier units lack controllability, resulting in the inability to control the power flow distribution within the system. Therefore, it is necessary to study a flexible direct-current traction power supply system with strong controllability. The flexible direct-current traction power supply solution uses highly controllable converters as main power supply devices, instead of uncontrollable diode rectifier units, to reduce the external power source demand of the direct-current traction power supply system, improve the utilization rate of locomotive regenerative braking energy, and manage power quality of an alternating-current/direct-current system, bringing many advantages to the traction power supply system.

Current research results related to the flexible direct-current traction power supply solution mainly focus on a flexible direct-current traction power supply system solution based on bidirectional converters. A traditional bidirectional converter may only be connected to a grid side and a traction network side, while a multi-port energy router may be connected to an external power source and a traction network, and integrate photovoltaic power, energy storage, and a station auxiliary load. A flexible direct-current traction power supply system solution based on energy routers replaces the bidirectional converters with the multi-port energy routers. On the basis of the flexible direct-current traction power supply system based on the bidirectional converters, this solution further improves reliability, economy, energy-saving benefits of the system, and is more convenient to access and absorption of renewable energy, optimizing energy consumption of the traction substation, and reducing the volume of power supply devices.

Although relevant literature has introduced the energy routers into the direct-current traction power supply system to facilitate the access of new types of devices such as renewable energy and energy storage, the diode rectifier units are still retained as the core power supply devices. Since the operation characteristic of the diode rectifier units is a constant volt-ampere characteristic curve, the operating point of the diode rectifier unit lacks controllability, thus making it difficult to flexibly regulate power flow of the entire system. If the system power flow is regulated by relying on frequent charging and discharging of energy storage devices, the service life of the energy storage devices will be reduced, resulting in high economic costs. Due to an insufficient regulation capability of the system power flow, economic and energy-saving benefits of this type of technology are limited. This type of technology still needs to design an external power supply configuration solution according to an inherent characteristic of an uncontrollable diode rectifier unit, making it difficult to reduce the construction cost of the external power sources. Moreover, locomotive regenerative energy and renewable energy output within the system cannot be absorbed economically and efficiently.

In the relevant literature, existing traction substation transformers and diode rectifier units are replaced with energy routers, and power electronic topology of the energy routers includes a high-voltage transformation module, a medium-voltage transformation module, and a low-voltage transformation module, resulting in high device costs. If the transformer is retained within the traction substation and only the energy router is used to replace the diode rectifier unit, a complexity degree of the energy router and system costs can be significantly reduced. However, the design result requires too many energy routers that convert a high voltage to a low voltage, resulting in excessively high system costs.

### SUMMARY

The present disclosure provides a control architecture for a flexible direct-current traction power supply system based on energy routers, which overcomes deficiencies in system structure design of an existing direct-current traction power supply system that uses diode rectifier units as core power supply devices and an existing direct-current traction power supply system that is based on energy routers, and provides a corresponding coordinated control technical solution.

Embodiments of the present disclosure provide a control architecture for a flexible direct-current traction power supply system based on energy routers. The flexible direct-current traction power supply system includes a plurality of traction substations and external power sources connected to the plurality of traction substations. A locomotive is connected to the plurality of traction substations through an overhead contact line. Each of the plurality of traction substations includes a plurality of energy routers. Each of the plurality of energy routers has at least three ports. A first port is connected to the external power source through a traction substation alternating-current bus, a second port is connected to the overhead contact line through a traction bus, and the rest of ports are connected to one or more of photovoltaic power, wind power, energy storage, a direct-current load, and an alternating-current load. The control architecture for the flexible direct-current traction power supply system based on the energy routers includes a system-level coordinated control layer, a traction substation-level coordinated control layer, and a port-level coordinated control layer. The system-level coordinated control layer is connected to the traction substation-level coordinated control layer, and is configured to obtain measurement information from the traction substation-level coordinated control layer and transmit generated control instructions to the traction substation-level coordinated control layer. The traction substation-level coordinated control layer is connected to the port-level coordinated control layer, and is configured to obtain measurement information from the port-level coordinated control layer and transmit generated control instructions to the port-level coordinated control layer. The port-level coordinated control layer is connected to the plurality of energy routers, and is configured to obtain measurement information from the plurality of energy routers and transmit generated control instructions to the plurality of energy routers.

Optionally, in the flexible direct-current traction power supply system, a plurality of discrete independent converters are included in each of the plurality of energy routers. The energy router has a distributed structure or a centralized structure, converters of the energy router with the distributed structure share no power electronic device or bridge arm, and each port of the converters of the energy router with the centralized structure shares the same power electronic device or bridge arm in corresponding energy conversion processes.

Optionally, in the flexible direct-current traction power supply system, the traction substation alternating-current bus and each the plurality of energy routers form two paths to the alternating-current load, to supply power to the alternating-current load only through the energy router or the traction substation alternating-current bus.

Optionally, the port-level coordinated control layer is configured to: directly control a plurality of ports of the plurality of energy routers; perform constant voltage control on ports of the energy routers connected to the direct-current load and the alternating-current load among the plurality of ports; under a normal operating condition, perform maximum power point tracking control on ports of the energy routers connected to the photovoltaic power and the wind power among the plurality of ports; under the normal operating condition, perform fixed voltage control ports of the energy routers connected to the traction bus among the plurality of ports, a voltage reference instruction being provided by the traction substation-level coordinated control layer, wherein the energy routers are controlled according to constant power when a difference between power of the energy router and a maximum capacity is smaller than a predetermined threshold; under the normal operating condition, perform control on ports of the energy routers connected to the external power source among the plurality of ports according to a constant alternating-current voltage and constant reactive power; and perform constant power control on ports of the energy routers connected to energy storage among the plurality of ports to regulate output power of an energy storage device, a power reference instruction being provided by the traction substation-level coordinated control layer.

Optionally, the system-level coordinated control layer is further configured to perform energy management and operation optimization at the level of the flexible direct-current traction power supply system, regulate a voltage and power of each of the plurality of traction substations, and regulate power flow distribution of the flexible direct-current traction power supply system.

Optionally, the control instructions of the system-level coordinated control layer include direct-current voltage reference instructions at traction network sides, power reference instructions for energy storages, and reactive power reference instructions at external power source sides. When the number of energy routers in each of the plurality of traction substations is greater than 1, the traction substation-level coordinated control layer serves as an intermediate control layer to make energy routers in the same traction substation operate at the same operating point.

The control architecture for the flexible direct-current traction power supply system based on the energy routers according to the embodiments of the present disclosure has the following beneficial effects.

Compared with the existing direct-current traction power supply system using the diode rectifier units as the core power supply devices, the solution of the present disclosure can regulate system power flow more flexibly and economically, optimize economic and energy-saving benefits of the traction power supply system, and reduce a construction demand for the external power source.

Compared with the existing flexible direct-current traction power supply system based on the bidirectional converters, the energy router is more convenient to access of renewable energy and energy storage, facilitates provision of a power source for a direct-current load of a station, and can save redundant devices, optimize control performance of a power electronic device, reduce device volume, and lower energy consumption.

Compared with the existing direct-current traction power supply system based on the energy routers, a transformer structure is retained, thereby reducing a complexity degree and device costs of a single energy router. Moreover, structural design of the traction substation is optimized, avoiding an excessive number of energy routers in the traction substation.

Additional aspects and advantages of the present disclosure will be provided in part in the following description, or will become apparent in part from the following description, or can be learned from practicing of the present disclosure.

### BRIEF DESCRIPTION OF THE DRAWINGS

The above and/or additional aspects and advantages of the present disclosure will become apparent and readily appreciated from the following description of the embodiments in conjunction with the accompanying drawings, in which:
FIG. 1 is a schematic diagram of a structure of a flexible direct-current traction power supply system based on energy routers according to an embodiment of the present disclosure; and
FIG. 2 is a schematic diagram of a control architecture for a flexible direct-current traction power supply system based on energy routers according to an embodiment of the present disclosure.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

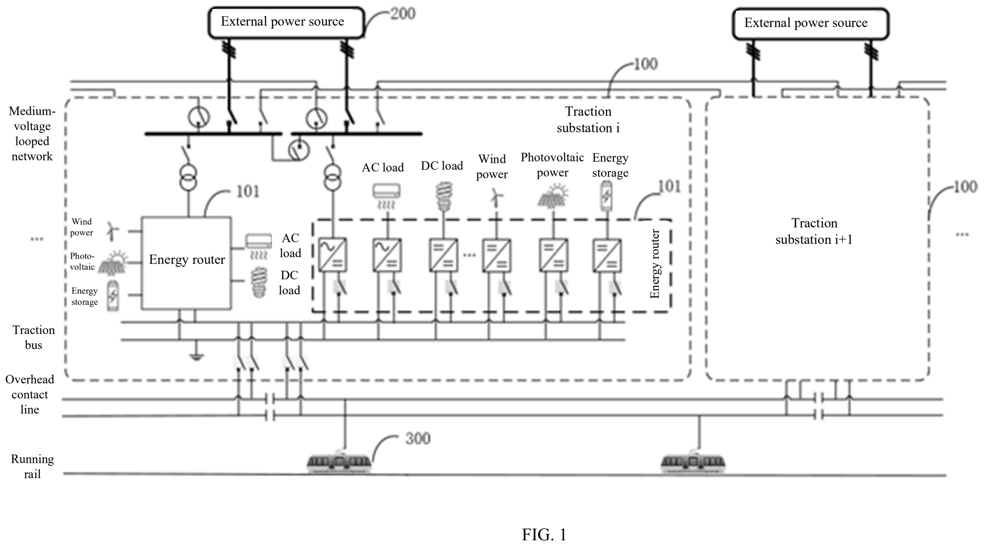

FIG. 1 is a schematic diagram of a structure of a flexible direct-current traction power supply system based on energy routers according to an embodiment of the present disclosure.

As shown in FIG. 1, the flexible direct-current traction power supply system based on the energy routers includes a plurality of traction substations 100 and external power sources 200 connected to the plurality of traction substations 100. Locomotives 300 are connected to the plurality of traction substations 100 through an overhead contact line.

Each of the plurality of traction substations 100 includes a plurality of energy routers 101. Each of the plurality of energy routers 101 has at least three ports. A first port is connected to an external power source 200 through a traction substation alternating-current bus, a second port is connected to the overhead contact line through a traction bus, and the rest of ports are connected to one or more of photovoltaic power, wind power, energy storage, a direct-current load, and an alternating-current load.

There is a plurality of traction substations 100 in the traction power supply system. The locomotive is powered by the overhead contact line or a third rail. The overhead contact line or the third rail is connected to the traction bus inside the traction substation 100. A voltage level of each of the traction bus, the overhead contact line, and the third rail includes, but is not limited to, 750V, 1500V, and 3000V. There is a plurality of traction substation alternating-current buses inside each traction substation 100. Let *Xᵢ* be the number of traction substation alternating-current buses in an i-th traction substation (the number of traction substation alternating-current buses includes, but is not limited to 2, and *Xᵢ*=2 in FIG. 1). The traction substation alternating-current bus connects the external power source to the traction substation, with voltage levels including but not limited to 35kV and 10kV.

Each traction substation alternating-current bus is connected to one energy router 101. The energy router 101 has at least one port connected to the traction substation alternating-current bus and one port connected to the traction bus, and may also have ports connected to photovoltaic power, wind power, energy storage, a direct-current load, and an alternating-current load. Voltage levels for different energy storage, direct-current loads, and alternating-current loads may vary. To adapt to the connection of energy storage, direct-current loads, and alternating-current loads of different voltage levels, the energy router 101 may have more than one port connected to energy storage, the direct-current load, or the alternating-current load.

A plurality of discrete independent converters are included in the energy router 101. The energy router 101 has a distributed structure or a centralized structure. Converters of the energy router with the distributed structure share no power electronic device or bridge arm, and each port of the converters of the energy router with the centralized structure shares the same power electronic device or bridge arm in corresponding energy conversion processes. The design of the energy router may adopt the distributed structure shown in FIG. 1, i.e., a plurality of converters are designed separately and operate independently. The design may also adopt the centralized structure that integrates a plurality of ports and shares the power electronic devices. The energy router with the centralized structure may reduce device redundancy and further comprehensively optimize device loss and volume.

In a traditional direct-current traction power supply system, the alternating-current load in the traction substation is powered by the traction substation alternating-current bus. In this technical solution, a power supply path for the alternating-current load may have different options: supplying power to the alternating-current load via two paths provided by the traction substation alternating-current bus and the energy router; supplying power to the alternating-current load only by the energy router; or supplying power to the alternating-current load only by the traction substation alternating-current bus. If power is supplied by the traction substation alternating-current bus to the alternating-current load, it will take a relatively long time to restore the power supply when the external power source fails. However, if the traction substation alternating-current bus and the energy router are used to form two paths for supplying power to the alternating-current load, the two paths may serve as backups for each other, improving reliability of the power supply to the alternating-current load.

The flexible direct-current traction power supply system based on the energy routers according to the embodiments of the present disclosure can more flexibly and economically regulate system power flow, optimize economic and energy-saving benefits of the traction power supply system, and reduce construction demand for the external power source. The energy routers are more convenient to access of renewable energy and energy storage, facilitate provision of a power source to a direct-current load of a station, and can save redundant devices, optimize control performance of a power electronic device, reduce device volume, and lower energy consumption. The direct-current traction power supply system based on the energy routers retains a transformer structure, thereby reducing complexity and device costs of a single energy router, and optimizes structural design of the traction substations, avoiding an excessive number of energy routers in the traction substations.

Next, a control architecture for a flexible direct-current traction power supply system based on energy routers proposed according to the embodiments of the present disclosure is described with reference to the accompanying drawings.

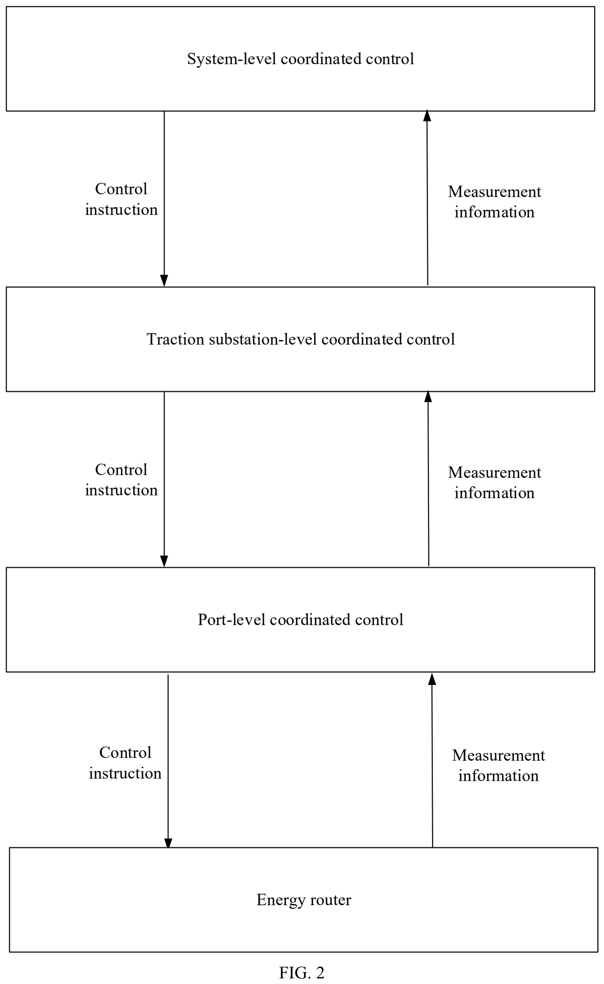

FIG. 2 is a schematic diagram of a control architecture for a flexible direct-current traction power supply system based on energy routers according to an embodiment of the present disclosure.

As shown in FIG. 2, the control architecture for the flexible direct-current traction power supply system based on the energy routers includes: a system-level coordinated control layer, a traction substation-level coordinated control layer, and a port-level coordinated control layer.

The system-level coordinated control layer is connected to the traction substation-level coordinated control layer, and is configured to obtain measurement information from the traction substation-level coordinated control layer and transmit generated control instructions to the traction substation-level coordinated control layer. The traction substation-level coordinated control layer is connected to the port-level coordinated control layer, and is configured to obtain measurement information from the port-level coordinated control layer and transmit generated control instructions to the port-level coordinated control layer. The port-level coordinated control layer is connected to the plurality of energy routers, and is configured to obtain measurement information from the plurality of energy routers and transmit generated control instructions to the plurality of energy routers.

Measurement information required by system-level coordinated control is provided by lower-layer traction substation-level coordinated control, and control instructions are transmitted to lower-layer traction substation-level coordinated control. Measurement information required by traction substation-level coordinated control is provided by lower-layer port-level coordinated control, and control instructions are transmitted to the lower-layer port-level coordinated control. Measurement information required by port-level coordinated control is real-time measurement information of the energy router and a related device, and control instructions are transmitted to the energy router.

Optionally, in an embodiment of the present disclosure, the port-level coordinated control layer is configured to: directly control a plurality of ports of the energy router; perform constant voltage control on ports of the energy routers connected to the direct-current load and the alternating-current load among the plurality of ports; under a normal operating condition, perform maximum power point tracking control on ports of the energy routers connected to the photovoltaic power and the wind power among the plurality of ports; under the normal operating condition, perform fixed voltage control on ports of the energy router connected to the traction bus among the plurality of ports, a voltage reference instruction being provided by the traction substation-level coordinated control layer, wherein the energy routers are controlled according to constant power when a difference between power of the energy router and a maximum capacity is smaller than a predetermined threshold; under the normal operating condition, perform control on ports of the energy routers connected to the external power source among the plurality of ports according to a constant alternating-current voltage and constant reactive power; and perform constant power control on ports of the energy routers connected to energy storage among the plurality of ports to regulate output power of an energy storage device, a power reference instruction being provided by the traction substation-level coordinated control layer.

Specifically, the port-level coordinated control directly controls each port of a multi-port energy router. For ports that supply power to direct-current loads and alternating-current loads within the station and traction substation, under the normal operating condition, the constant voltage control is performed on the ports to ensure stable voltages for the direct-current loads and the alternating-current loads, satisfying an energy demand. Under emergency or fault operating conditions, some ports may be blocked, and a circuit breaker may be disconnected to remove a third-level load. For the ports connected to photovoltaic power and wind power, under the normal operating condition, MPPT control is performed to ensure that the photovoltaic power and wind power may maximize their power output to the greatest extent possible. Under the emergency or fault operating conditions, some ports may curtail wind and solar power, thereby ensuring safe and reliable operation of the system. For the ports connected to the traction network, under the normal operating condition, the energy routers are controlled according to a fixed voltage, and the voltage reference instruction is provided by the traction substation-level coordinated control. When the power of the energy router approaches or equals its maximum capacity, the energy router is controlled according to the constant power to ensure that the energy router does not violate a capacity limit. For the ports connected to the external power source, under the normal operating condition, the energy routers are controlled according to the constant alternating-current voltage and constant reactive power. A reactive power instruction may be simply controlled to 0, or the control instruction from the traction substation-level coordinated control may be accepted to optimize a voltage-reactive power problem of an alternating-current network. For the ports connected to energy storage, the output power of the energy storage device is regulated according to the constant power, and the power reference instruction is provided by the traction substation-level coordinated control.

The top layer is the system-level coordinated control. This layer performs energy management and operation optimization at the entire traction power supply system level, regulates a voltage and power of each traction substation, and thus controls power flow distribution of the entire system. The system-level coordinated control may solve an optimal control decision for a system state variable in an optimization-based manner, achieving optimal control for the entire system. The system-level coordinated control may also adopt a simplified control method to reduce implementation difficulty of the control, such as using droop control or master-slave control.

An output control instruction of the system-level coordinated control is an instruction for each traction substation. The instruction includes a direct-current voltage reference instruction at a traction network side, a power reference instruction for energy storage, and a reactive power reference instruction at an external power source side. There is a plurality of energy routers within one traction substation. When the number of energy routers within the traction substation is greater than one, the traction substation-level coordinated control is required as an intermediate control layer that connects upper and lower layers. Control purpose of the traction substation-level coordinated control is to ensure that energy routers within the same traction substation operate at the same operating point, i.e., to ensure that a plurality of energy routers within the same traction substation have the same energy flow relationship and output voltage.

It should be noted that the above explanation of the embodiments of the flexible direct-current traction power supply system based on the energy routers is also applicable to the control architecture for the flexible direct-current traction power supply system based on the energy routers according to this embodiment, and thus details thereof will be omitted here.

The control architecture for the flexible direct-current traction power supply system based on the energy routers provided according to the embodiments of the present disclosure provides a three-level coordinated control architecture to achieve the optimal control of the entire system.

In the description of this specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or N embodiments or examples in a suitable manner. In addition, those skilled in the art can combine the different embodiments or examples and the features of the different embodiments or examples described in this specification without contradicting each other.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "N" means at least two, such as two, three, etc., unless otherwise specifically defined.

## Claims

1. A control architecture for a flexible direct-current traction power supply system based on energy routers, wherein the flexible direct-current traction power supply system comprises a plurality of traction substations and external power sources connected to the plurality of traction substations, a locomotive being connected to the plurality of traction substations through an overhead contact line, **characterized in that**:
in the flexible direct-current traction power supply system based on the energy routers, each of the plurality of traction substations comprises a plurality of energy routers, each of the plurality of energy routers having at least three ports, a first port being connected to the external power source through a traction substation alternating-current bus, a second port being connected to the overhead contact line through a traction bus, and the rest of ports being connected to one or more of photovoltaic power, wind power, energy storage, a direct-current load, and an alternating-current load; and
the control architecture for the flexible direct-current traction power supply system based on the energy routers comprises a system-level coordinated control layer, a traction substation-level coordinated control layer, and a port-level coordinated control layer, wherein:
the system-level coordinated control layer is connected to the traction substation-level coordinated control layer, and is configured to obtain measurement information from the traction substation-level coordinated control layer and transmit generated control instructions to the traction substation-level coordinated control layer;
the traction substation-level coordinated control layer is connected to the port-level coordinated control layer, and is configured to obtain measurement information from the port-level coordinated control layer and transmit generated control instructions to the port-level coordinated control layer; and
the port-level coordinated control layer is connected to the plurality of energy routers, and is configured to obtain measurement information from the plurality of energy routers and transmit generated control instructions to the plurality of energy routers.

2. The control architecture for the flexible direct-current traction power supply system based on the energy routers according to claim 1, wherein in the flexible direct-current traction power supply system based on the energy routers, a plurality of discrete independent converters are included in each of the plurality of energy routers, the energy router having a distributed structure or a centralized structure, converters of the energy router with the distributed structure sharing no power electronic device or bridge arm, and each port of the converters of the energy router with the centralized structure sharing the same power electronic device or bridge arm in corresponding energy conversion processes.

3. The control architecture for the flexible direct-current traction power supply system based on the energy routers according to claim 1, wherein in the flexible direct-current traction power supply system based on the energy routers, the traction substation alternating-current bus and each of the plurality of energy routers form two paths to the alternating-current load, to supply power to the alternating-current load only through the energy router or the traction substation alternating-current bus.

4. The control architecture for the flexible direct-current traction power supply system based on the energy routers according to claim 1, wherein:
the port-level coordinated control layer is configured to:
directly control a plurality of ports of the plurality of energy routers;
perform constant voltage control on ports of the energy routers connected to the direct-current load and the alternating-current load among the plurality of ports;
under a normal operating condition, perform maximum power point tracking control on ports of the energy routers connected to the photovoltaic power and the wind power among the plurality of ports;
under the normal operating condition, perform fixed voltage control on ports of the energy routers connected to the traction bus among the plurality of ports, a voltage reference instruction being provided by the traction substation-level coordinated control layer, wherein the energy routers are controlled according to constant power when a difference between power of the energy router and a maximum capacity is smaller than a predetermined threshold;
under the normal operating condition, perform control on ports of the energy routers connected to the external power source among the plurality of ports according to a constant alternating-current voltage and constant reactive power; and
perform constant power control on ports of the energy routers connected to the energy storage among the plurality of ports to regulate output power of an energy storage device, a power reference instruction being provided by the traction substation-level coordinated control layer.

5. The control architecture for the flexible direct-current traction power supply system based on the energy routers according to claim 1, wherein the system-level coordinated control layer is further configured to perform energy management and operation optimization at the level of the flexible direct-current traction power supply system, regulate a voltage and power of each of the plurality of traction substations, and regulate power flow distribution of the flexible direct-current traction power supply system.

6. The control architecture for the flexible direct-current traction power supply system based on the energy routers according to claim 1, wherein the control instructions of the system-level coordinated control layer comprise direct-current voltage reference instructions at traction network sides, power reference instructions for energy storages, and reactive power reference instructions at external power source sides, wherein when the number of energy routers in each of the plurality of traction substations is greater than 1, the traction substation-level coordinated control layer serves as an intermediate control layer to make energy routers in the same traction substation operate at the same operating point.
